# EUROPÄISCHE PATENTSCHRIFT

(11) **EP 3 252 179 B1**
(45) Veröffentlichungstag und Bekanntmachung des Hinweises auf die Patenterteilung: **28.10.2020**
(21) Anmeldenummer: 17000746.2
(22) Anmeldetag: 02.05.2017
(51) Int. Cl.: C22C 9/01, C22C 9/06, F16C 33/12

(54) **KUPFERLEGIERUNG ENTHALTEND ALUMINIUM UND NICKEL, DEREN VERWENDUNG UND HERSTELLVERFAHREN**
COPPER ALLOY COMPRISING ALUMINIUM AND NICKEL, ITS USE AND PROCESS FOR PRODUCTION
ALLIAGE DE CUIVRE COMPRENANT ALUMINIUM ET NICKEL, SON UTILISATION ET PROCÉDÉ DE SA PRODUCTION

(30) Priorität: 03.06.2016 DE 102016006824
(43) Veröffentlichungstag der Anmeldung: 06.12.2017
(73) Patentinhaber: Wieland-Werke AG, 89079 Ulm (DE)
(72) Erfinder: Altenberger, Igor, 89231 Neu-Ulm (DE); Kuhn, Hans-Achim, 89257 Illertissen (DE)

(56) Entgegenhaltungen:
- WO-A1-2011/072545
- DE-A1- 1 558 773
- JP-A- H10 219 373
- US-A- 4 726 858
- US-A1- 2011 229 367
- CHEN C H ET AL: "Phase transformations in a Cu-14.2Al-12.0Ni alloy", SCRIPTA MATERIA, ELSEVIER, AMSTERDAM, NL, Bd. 47, Nr. 8, 1. Oktober 2002 (2002-10-01), Seiten 515-520, XP004378197, ISSN: 1359-6462, DOI: 10.1016/S1359-6462(02)00192-6

## Beschreibung

Die Erfindung betrifft eine aluminium- und nickelhaltige Kupferlegierung, deren Verwendung für Gleitelemente, Steckverbinder, Dichtelemente, Werkzeuge, Federelemente oder Filterelemente sowie Herstellverfahren der Legierung.

Durch Zulegieren bestimmter Elemente können die Eigenschaften von Kupferlegierungen gezielt eingestellt werden. Eine hohe Festigkeit der Legierung geht dabei üblicherweise mit einer deutlich reduzierten elektrischen Leitfähigkeit einher. Deshalb sind Kupferlegierungen von Interesse, die sich durch eine hohe Festigkeit bei gleichzeitig akzeptabler elektrischer Leitfähigkeit auszeichnen.

Aus der Druckschrift DE 1 558 773 sind Kupferlegierungen mit 10 bis 12 Gew.-% Aluminium und 2 bis 10 Gew.-% Nickel, optional noch 1 bis 6 Gew.-% Eisen, sowie ein Verfahren zur Wärmebehandlung solcher Legierungen bekannt. Die Wärmebehandlung findet in einem Temperaturbereich zwischen 427 und 566 °C statt. An Proben, die zwischen 4 und 5 Gew.-% Nickel und zwischen 4 und 5 Gew.-% Eisen enthalten, wurden Zugfestigkeiten von maximal 940 MPa ermittelt. Hinsichtlich der elektrischen Leitfähigkeit dieser Legierungen sind der DE 1 558 773 keine Informationen zu entnehmen.

Des Weiteren sind aus der Druckschrift US 3 901 692 korrosionsbeständige Kupferlegierungen mit 0,1 bis 11 Gew.-% Aluminium, 0,1 bis 10 Gew.-% Nickel, 0,01 bis 6 Gew.-% Eisen, 0,001 bis 1,0 Gew.-% Bor und 0,01 bis 10 Gew.-% Mangan bekannt. Bevorzugt beträgt der Aluminiumanteil 6 bis 7 Gew.-%, der Nickelanteil 5 bis 7 Gew.-%, der Eisenanteil 3 bis 4 Gew.-% und der Mangananteil 5 bis 10 Gew.-%. Optional können der Legierung noch 0,01 bis 5 Gew.-% Kobalt hinzutreten. Für eine Legierung mit 6,5 Gew.-% Ni, 6 Gew.-% AI, 3 Gew.-% Co, 3 Gew.-% Fe und 0,2 Gew.-% Mn wird eine elektrische Leitfähigkeit zwischen 15 und 20 % IACS berichtet. Für kobaltfreie Legierungen sind keine Aussagen bezüglich der elektrischen Leitfähigkeit dokumentiert.

In dem Fachaufsatz von C.H. Chen et al "Phase transformations in a Cu-14.2Al-12.0Ni alloy" wird über Untersuchungen der Mikrostruktur einer abgeschreckten CuAl14Ni12 Legierung berichtet. Die verwendeten Proben wurden gegossen, wärmebehandelt und geschnitten. Die Legierung wird nicht umgeformt. Über die mechanischen Eigenschaften der Legierung sind keine Informationen zu entnehmen.

In der Patentschrift US 4 726 858 A ist die Herstellung einer Folie aus der Legierung CuAl16Ni12 beschrieben. Die Legierung wird in flüssigem Zustand auf die Schmalseite eines Rades aufgebracht und dann abgeschreckt, so dass eine Folie der Dicke 40 µm entsteht. Die Folie wird wärmebehandelt, jedoch nicht umgeformt. Die Folie dient als Aufzeichnungsmaterial, zum Darstellen von Informationen oder als Sensor. Über die mechanischen Eigenschaften der Legierung sind keine Informationen zu entnehmen.

Der Erfindung liegt die Aufgabe zugrunde, eine Be- und Sn-freie Kupferlegierung anzugeben, die im Gusszustand eine Zugfestigkeit von mindestens 700 MPa und im warmumgeformten Zustand ohne Kaltumformung eine Zugfestigkeit von mindestens 800 MPa bei einer elektrischen Leitfähigkeit von mindestens 13 % IACS aufweist. Ferner soll die Legierung über eine ausreichende Duktilität verfügen, bis 500 °C anlassbeständig und mit üblichen Verfahren zerspanbar sein. Darüber hinaus liegt der Erfindung die Aufgabe zugrunde, Verwendungen anzugeben, für die diese Kupferlegierung geeignet ist.

Die Erfindung wird bezüglich einer Kupferlegierung durch die Merkmale des Anspruchs 1, bezüglich deren Verwendungen durch die Merkmale der Ansprüche 6 bis 11 und bezüglich eines Herstellungsverfahrens durch die Merkmale des Anspruchs 12 wiedergegeben. Die weiteren rückbezogenen Ansprüche betreffen vorteilhafte Aus- und Weiterbildungen der Erfindung.

Die Erfindung betrifft also eine Kupferlegierung mit folgender Zusammensetzung in Gewichts-% :
10,6 bis 18,0 % Al,
10,5 bis 14,5 % Ni,
wahlweise noch bis zu 2 % Fe,
wahlweise noch bis zu 1 % Co,
wahlweise noch bis zu 0,5 % Ti,
wahlweise noch bis zu 0,5 % Mn,
wahlweise noch bis zu 0,15 % B,
wahlweise noch bis zu 0,1 % Ca,
wahlweise noch bis zu 0,1 % C,

Rest Kupfer sowie unvermeidbare Verunreinigungen, wobei die Legierung nach einer Warmumformung im Temperaturbereich zwischen 610 und 690 °C mit einem Umformgrad von mindestens 20 % eine Zugfestigkeit von mindestens 800 MPa aufweist und wobei im Gefüge der Legierung Nickelaluminide vom Typ NiAl als Ausscheidungen eingelagert sind.

Die Erfindung geht dabei von der Überlegung aus, dass durch Zulegieren von Aluminium und Nickel eine hochwarmfeste, leichte Kupferlegierung mit hoher Festigkeit, akzeptabler Duktilität und gleichzeitig guter elektrischer Leitfähigkeit erzeugt werden kann. Für Kupferlegierungen mit einem Al-Anteil von 10,6 bis 18 Gew.-% und einem Ni-Anteil von 10,5 bis 14,5 % beträgt die Zugfestigkeit im Gusszustand mindestens 700 MPa; die Erfindung erfordert mindestens 800 MPa. Durch eine Warmumformung im Temperaturbereich zwischen 610 und 690 °C mit einem Umformgrad von mindestens 20 % wird die Zugfestigkeit auf mindestens 800 MPa angehoben. Als Umformgrad wird hierbei die relative Reduktion der Querschnittsfläche definiert. Die Härte eines solchen Werkstoffs beträgt mindestens 280 HV. Bei der erfindungsgemäßen Kupferlegierung kann also ohne Kaltumformung eine hohe Festigkeit erreicht werden. Damit lässt sie sich auch in großen Abmessungen im hochfesten Zustand herstellen. Die elektrische Leitfähigkeit beträgt im Gusszustand ungefähr 12 % IACS und bei der Knetlegierung, also nach der Warmumformung, mindestens 13 % IACS. Die Festigkeit der erfindungsgemäßen Kupferlegierung kann weiter gesteigert werden, wenn die Legierung nach der oben beschriebenen Warmumformung bei Temperaturen zwischen 300 und 600 °C ausgelagert wird. Bevorzugt findet die Auslagerung im Temperaturbereich zwischen 300 und 400 °C und mit einer Auslagerungsdauer von mindestens 30 Minuten und höchstens 7 h statt. Die Dichte der erfindungsgemäßen Kupferlegierung liegt je nach genauer Zusammensetzung zwischen 6500 und 7000 kg/m³. Die Legierung ist sehr alterungsbeständig und konventionell mit üblichem Werkzeug zerspanbar. Bei einem AI-Anteil von weniger als 10,6 Gew.-% liegt die Zugfestigkeit im warmumgeformten Zustand unter 800 MPa, im Gusszustand deutlich unter 700 MPa. Bevorzugt beträgt der AI-Anteil mindestens 11 Gew.-%. Bei einem AI-Anteil von mehr als 18 Gew.-% beträgt die elektrische Leitfähigkeit weniger als 13 % IACS.

Bei einem Ni-Anteil von weniger als 10,5 Gew.-% liegt die Zugfestigkeit im warmumgeformten Zustand deutlich unter 800 MPa, im Gusszustand deutlich unter 700 MPa. Bevorzugt beträgt der Ni-Anteil mindestens 11 Gew.-%. Durch den hohen Ni-Anteil besitzt die Legierung ausgezeichnete Korrosionsbeständigkeit an Luft sowie in Seewasser. Mit steigendem Ni-Anteil wird die Legierung spröder und auch teurer. Deshalb sollte der Ni-Anteil 14,5 Gew.-% nicht übersteigen.

Bei der erfindungsgemäßen Kupferlegierung werden mit einem besonders hohen Volumenanteil Nickelaluminide gebildet, die als Ausscheidungen im Gefüge, das sonst aus Kupfermischkristall und harter γ₂-Phase (Al₄Cu₉) besteht, eingelagert sind. Der Volumenanteil dieser Nickelaluminide kann 50 Vol.-% oder mehr betragen. Die Ausscheidungen werden als hochwarmfeste, geordnete Phase mit der stöchiometrischen Zusammensetzung NiAl gebildet. Durch den hohen Ausscheidungsanteil wird eine besonders hohe Warmfestigkeit erzielt, da Versetzungen die Ausscheidungen umgehen müssen. Der hohe Ausscheidungsanteil bewirkt ferner eine hohe Verschleißbeständigkeit und Festigkeit bei Raumtemperatur.

Bei der erfindungsgemäßen Kupferlegierung kann bei Bedarf ein Gefüge mit einer kleinen Korngröße eingestellt werden, indem zumindest eines der folgenden Elemente zugegeben wird:
wahlweise noch bis zu 2 Gew.-% Fe,
wahlweise noch bis zu 1 Gew.-% Co,
wahlweise noch bis zu 0,5 Gew.-% Ti,
wahlweise noch bis zu 0,5 Gew.-% Mn,
wahlweise noch bis zu 0,15 Gew.-% B,
wahlweise noch bis zu 0,1 Gew.-% Ca,
wahlweise noch bis zu 0,1 Gew.-% C.

Durch die Zugabe eines oder mehrerer dieser Elemente wird die Bildung eines groben Korns im Gusszustand gehemmt. Der Effekt der Kornfeinung tritt in signifikanter Weise erst oberhalb einer bestimmten Untergrenze auf, wobei diese Untergrenze für jedes Element verschieden sein kann. Solange eines der genannten Elemente in einem Anteil unterhalb dieser Schwelle in der Legierung vorhanden ist, ist es den Verunreinigungen zuzurechnen. Grundsätzlich ist es jedoch auch möglich, dass die erfindungsgemäße Kupfer-Aluminium-NickelLegierung keines der oben genannten Elemente aufweist.

Bevorzugt kann bei der erfindungsgemäßen Kupferlegierung die Summe aus Aluminiumanteil und Nickelanteil mindestens 22,1 Gew.-%, besonders bevorzugt mindestens 24 Gew.-% betragen. Oberhalb dieser Grenzen bilden sich ausreichend viele Nickelaluminide, so dass die Eigenschaften der Legierung gut ausgeprägt sind.

Bevorzugt kann bei der erfindungsgemäßen Kupferlegierung die Summe aus Aluminiumanteil und Nickelanteil höchstens 29 Gew.-%, besonders bevorzugt höchstens 27 Gew.-% betragen. Unterhalb dieser Grenzen treten unerwünschte Nebeneffekte der Legierungselemente, wie beispielsweise Versprödung, nur in unerheblichem Maße auf.

In bevorzugter Ausgestaltung der Erfindung kann bei der erfindungsgemäßen Kupferlegierung der Anteil an Aluminium mindestens 12 Gew.-% und höchstens 16 Gew.-% betragen. Mit einem Aluminiumanteil in diesem Bereich kann ein besonders günstiges Verhältnis von Festigkeit, Verschleißbeständigkeit und elektrischer Leitfähigkeit erreicht werden.

Vorteilhafterweise kann bei der erfindungsgemäßen Kupferlegierung der Anteil an Nickel mindestens 11 Gew.-% und höchstens 13 Gew.-% betragen. Mit einem Nickelanteil in diesem Bereich kann ein besonders günstiges Verhältnis von Festigkeit, Duktilität und elektrischer Leitfähigkeit erreicht werden.

Bei einer besonders vorteilhaften Ausführungsform der erfindungsgemäßen Kupferlegierung kann der Anteil an Aluminium mindestens 12 Gew.-%, besonders bevorzugt mindestens 13 Gew.-%, und höchstens 16 Gew.-% und der Anteil an Nickel mindestens 11 Gew.-% und höchstens 13 Gew.-% betragen. Bei einer Kupferknetlegierung dieser Zusammensetzung kann ohne Kaltverformung eine Zugfestigkeit von über 1000 MPa bei einer elektrischen Leitfähigkeit von mindestens 15 % IACS erreicht werden. Legierungen dieser Zusammensetzung sind zudem besonders warmfest. Eine merkliche Abnahme der Zugfestigkeit wird erst nach einer Wärmebehandlung von 6 Stunden bei 600 °C beobachtet. Merkliche Abnahme bedeutet hier eine Abnahme von mehr als 10 %.

Ferner kann es bei der erfindungsgemäßen Kupferlegierung vorteilhaft sein, dass das Verhältnis von Aluminiumanteil (in Gew.-%) zu Nickelanteil (in Gew.-%) mindestens 0,95 und höchstens 1,28 beträgt. Stehen Aluminiumanteil und Nickel-anteil in dieser Relation zueinander, dann sind besonders günstige Bedingungen für die Bildung der vorteilhaften Nickelaluminide gegeben. Stöchiometrisch im Überschuss vorhandenes Aluminium wird entweder in die Matrix der Legierung eingebaut oder bildet die verschleißbeständige, aber spröde Al₄Cu₉-Phase.

Besonders vorteilhafte Legierungen können einen Aluminium-Anteil von mindestens 13,5 Gew.-% und einen Nickel-Anteil von mindestens 11,5 Gew.-% enthalten. Werkstoffe mit hervorragenden Eigenschaften werden aus solchen Legierungen durch Strangpressen gewonnen. Bevorzugt beträgt das Pressverhältnis, definiert als Quotient aus Querschnittsfläche des Materials vor dem Pressvorgang zu Querschnittsfläche des Materials nach dem Pressvorgang, dabei mindestens 11,5 und die Presstemperatur liegt zwischen 660 und 690 °C. Bei solchen Werkstoffen wird eine Zugfestigkeit von 1150 MPa und eine Wechselfestigkeit von 500 MPa erreicht. Die Werkstoffe zeigen eine hohe Temperaturbeständigkeit. Sie können bis zu Temperaturen von 500 °C, kurzfristig sogar bis 650 °C, eingesetzt werden. Die Ursache für die besseren mechanischen Eigenschaften nach diesem Verfahren ist eine besonders fein verteilte NiAl-Phase.

Ein weiterer Aspekt der Erfindung schließt die Verwendung der erfindungsgemäßen Kupferlegierung für Gleitlager ein. Aufgrund des hohen Volumenanteils an NiAl-Auscheidungen weist die erfindungsgemäße Kupferlegierung eine hohe Warmfestigkeit und eine große Verschleißbeständigkeit auf. Diese Eigenschaften sind vorteilhaft für Gleitlager. Gleitlager aus der erfindungsgemäßen Kupferlegierung können auch unter Überlast, bei Trockenlauf oder bei Temperaturen über 200 °C betrieben werden, ohne dass Schäden auftreten.

Ein weiterer Aspekt der Erfindung schließt die Verwendung der erfindungsgemäßen Kupferlegierung für Steckverbinder ein. Für die Verwendung in Steckverbindern muss ein Werkstoff eine besondere Kombination von Festigkeit, elektrischer Leitfähigkeit und Beständigkeit gegen Spannungsrelaxation aufweisen. Die Festigkeit der erfindungsgemäßen Kupferlegierung liegt auf einem für Kupferwerkstoffe sehr hohen Niveau. Die elektrische Leitfähigkeit der erfindungsgemäßen Kupferlegierung liegt mit einem Mindestwert von 13 % IACS auf einem Niveau, das für Steckverbinder ausreichend ist. Die hohe Warmfestigkeit und die hohe Entfestigungstemperatur der erfindungsgemäßen Kupferlegierung bewirken eine gute Beständigkeit gegen Spannungsrelaxation.

Ein weiterer Aspekt der Erfindung schließt die Verwendung der erfindungsgemäßen Kupferlegierung für Dichtelemente ein. Beispiele hierfür sind Zylinderkopfdichtungen und Kontaktringe. Dichtelemente müssen verschleißfest und auch bei hohen Temperaturen beständig gegen Oxidation und Kriechen sein. Die erfindungsgemäße Kupferlegierung erfüllt diese Bedingungen aufgrund ihrer Zusammensetzung und ihrer Eigenschaften in hervorragender Weise.

Ein weiterer Aspekt der Erfindung schließt die Verwendung der erfindungsgemäßen Kupferlegierung für Werkzeuge ein. Werkzeuge müssen eine große Härte und eine hohe Verschleißbeständigkeit auch bei erhöhten Temperaturen aufweisen. Die erfindungsgemäße Kupferlegierung eignet sich deshalb besonders gut als Werkstoff für Werkzeuge. Eine weitere Verwendungsmöglichkeit für die erfindungsgemäße Kupferlegierung sind Bohrgestänge.

Ein weiterer Aspekt der Erfindung schließt die Verwendung der erfindungsgemäßen Kupferlegierung für Federelemente ein. Federn müssen eine hohe Resilienz aufweisen und relaxationsbeständig sein. Resilienz ist die Fähigkeit eines Materials, nach einer hohen elastischen Verformung in den Ausgangszustand zurückzukehren. Ein Werkstoff mit einer hohen Resilienz ist in der Lage, viel Energie in elastischer Form zu speichern und wieder abzugeben. Die erfindungsgemäße Kupferlegierung weist unter Zugbelastung eine hohe Streckgrenze beziehungsweise unter Druckbelastung eine hohe Stauchgrenze auf. Plastische Verformung tritt bis zu diesen Grenzen nicht auf. Folglich kann ein Federelement aus der erfindungsgemäßen Kupferlegierung viel Energie elastisch speichern. Die geringe Dichte von 6500 bis 7000 kg/m³ ermöglicht die Konstruktion relativ leichter Federelemente.

Ein weiterer Aspekt der Erfindung schließt die Verwendung der erfindungsgemäßen Kupferlegierung für Filterelemente, insbesondere antimikrobielle Filterelemente ein. Antimikrobielle Filter müssen in der Lage sein, einen Flüssigkeits- oder Luftdurchfluss bei gleichzeitiger mechanischer Blockierung von Bakterien und den meisten Viren zu gewährleisten. Hierzu sind Kanäle mit einer Durchlassbreite von 20 bis 50 nm erforderlich. Eine Struktur mit derartigen Kanälen kann erzeugt werden, indem die erfindungsgemäße Kupferlegierung im Gusszustand einer Ätzbehandlung unterzogen wird. Durch die Ätzbehandlung wird aus dem Gefüge der Kupfermischkristall entfernt und die NiAl-Ausscheidungen bleiben in lamellenartiger Form zurück. Zwischen benachbarten Lamellen werden durch das Entfernen des Kupfermischkristalls Kanäle mit einer Durchlassbreite von ungefähr 20 bis 50 nm gebildet. Eine solche Struktur stellt eine wirksame mechanische Barriere gegen sämtliche Bakterienarten und ungefähr 80 % aller bekannten Viren dar.

Die Erfindung wird anhand von Ausführungsbeispielen näher erläutert. Tabelle 1 zeigt eine Zusammenstellung von Legierungsproben Nr. 1 bis 8. Zu jeder Probe sind die Legierungszusammensetzung in Gew.-%, die Härte, die elektrische Leitfähigkeit und die Zugfestigkeit angeben. Mit Ausnahme der Probe Nr. 6, die nur im Gusszustand vorliegt, liegen die Proben im Zustand unmittelbar nach einer Warmumformung im Temperaturbereich zwischen 600 und 800 °C und einem Umformgrad von 20 % vor. Die Proben Nr. 1 bis 6 sind Vergleichsproben, die Proben Nr. 7 und 8 weisen eine erfindungsgemäße Zusammensetzung auf.

**Tabelle 1: Legierungsproben Nr. 1 bis 8**

| Probe Nr. | Al in Gew.-% | Ni in Gew.-% | Cu sowie Verunreinigungen | Härte | Elektrische Leitfähigkeit in IACS | Zugfestig keit Rm in MPa |
|---|---|---|---|---|---|---|
| 1 | 5,7 | 6,9 | Rest | 201 HV | 11,7 % | 401 |
| 2 | 6,5 | 7,9 | Rest | 234 HV | 13,3 % | 422 |
| 3 | 7,6 | 8,9 | Rest | 248 HV | 13,4 % | 661 |
| 4 | 8,6 | 9,8 | Rest | 246 HV | 13,5 % | 717 |
| 5 | 10,7 | 10,1 | Rest | 271 HV | 12,7 % | 820 |
| 6 | 9,2 | 17,9 | Rest | 250 HV | 8,0 % | - |
| 7 | 11,1 | 11,2 | Rest | 280 HV | 14,1 % | 830 |
| 8 | 13,9 | 12,1 | Rest | 300 HV | 14,8 % | 1000 |

Die Proben Nr. 1 bis 4 weisen einen vergleichsweise geringen Anteil an Aluminium und/oder Nickel auf. Die Zugfestigkeit dieser Proben nimmt mit steigendem Anteil an Aluminium und Nickel zu, sie liegt deutlich unter 750 MPa. Die elektrische Leitfähigkeit der Proben Nr. 2 bis 4 liegt auf dem gleichem Niveau. Die Probe Nr. 5 weist eine gegenüber den Proben 2 bis 4 erhöhte Zugfestigkeit und Härte auf, ihre elektrische Leitfähigkeit ist jedoch reduziert. Bei Probe Nr. 6 wurde der Nickel-Anteil mit 17,9 Gew.-% sehr hoch gewählt. Die Härte liegt ungefähr auf dem Wert der Proben Nr. 3 und 4, die elektrische Leitfähigkeit liegt mit 8 % IACS jedoch auf einem geringen Niveau.

Die erfindungsgemäßen Proben Nr. 7 und 8 zeichnen sich durch unerwartet gute Eigenschaften aus. Vergleicht man Probe Nr. 7 mit Probe Nr. 5, dann ist festzustellen, dass durch die Erhöhung der Anteile von Aluminium und insbesondere von Nickel die Festigkeit nochmals gestiegen ist, überraschender Weise aber auch die elektrische Leitfähigkeit zugenommen hat. Die Zunahme der elektrischen Leitfähigkeit bei Probe Nr. 7 ist aus den Eigenschaften der Proben Nr. 1 bis 6 nicht zu erwarten. Die besten Ergebnisse wurden mit Probe Nr. 8 erzielt. Bei ungefähr 14 Gew.-% Aluminium und 12 Gew.-% Nickel konnte im warmgewalzten Zustand eine Zugfestigkeit von ungefähr 1000 MPa erzielt werden. Die elektrische Leitfähigkeit nimmt mit fast 15 % IACS den höchsten Wert aller untersuchten Proben an. Die elektrische Leitfähigkeit der Probe Nr. 8 konnte durch eine Glühbehandlung von 3 Stunden bei 330 °C noch auf fast 16 % IACS gesteigert werden.

Probe Nr. 8 besitzt in der Summe 26 Gew.-% an Legierungselementen AI und Ni. Probe Nr. 6 besitzt in der Summe ungefähr 27 Gew.-% an Legierungselementen Al und Ni. Beide Proben weisen damit in der Summe ungefähr den gleichen Gewichtsanteil an Legierungselementen auf. Die Eigenschaften von Probe Nr. 8 sind jedoch deutlich besser als die von Probe Nr. 6. Dies zeigt, dass die Legierungselemente Al und Ni in einer bestimmten Relation zueinander ausgewählt werden müssen. Bei Probe Nr. 8 beträgt das Verhältnis der Gewichtsanteile von Al und Ni ungefähr 1,15. Legierungen mit günstigen Eigenschaften erhält man, wenn das Verhältnis von AI zu Ni mindestens 0,95 und höchstens 1,28 beträgt.

## Patentansprüche

1. Kupferlegierung mit folgender Zusammensetzung in Gew.-%:
10,6 bis 18 % Al,
10,5 bis 14,5 % Ni,
wahlweise noch bis zu 2 % Fe,
wahlweise noch bis zu 1 % Co,
wahlweise noch bis zu 0,5 % Ti,
wahlweise noch bis zu 0,5 % Mn,
wahlweise noch bis zu 0,15 % B,
wahlweise noch bis zu 0,1 % Ca,
wahlweise noch bis zu 0,1 % C,
Rest Kupfer sowie unvermeidbare Verunreinigungen,
**dadurch gekennzeichnet,**
**dass** die Legierung nach einer Warmumformung im Temperaturbereich zwischen 610 und 690 °C mit einem Umformgrad von mindestens 20 % eine Zugfestigkeit von mindestens 800 MPa aufweist und
**dass** im Gefüge der Legierung Nickelaluminide vom Typ NiAl als Ausscheidungen eingelagert sind.

2. Kupferlegierung nach Anspruch 1, **dadurch gekennzeichnet,**
**dass** der Anteil an Aluminium mindestens 12 Gew.-% und höchstens 16 Gew.-% beträgt.

3. Kupferlegierung nach Anspruch 1 oder 2, **dadurch gekennzeichnet,**
**dass** der Anteil an Nickel mindestens 11 Gew.-% und höchstens 13 Gew.-% beträgt.

4. Kupferlegierung nach einem der Ansprüche 1 bis 3, **dadurch**
**gekennzeichnet,**
**dass** der Anteil an Aluminium mindestens 13,5 Gew.-% und der Anteil an Nickel mindestens 11,5 Gew.-% beträgt.

5. Kupferlegierung nach einem der Ansprüche 1 bis 4, **dadurch**
**gekennzeichnet,**
**dass** das Verhältnis von Aluminiumanteil in Gew.-% zu Nickelanteil in Gew.-% mindestens 0,95 und höchstens 1,28 beträgt.

6. Verwendung einer Kupferlegierung gemäß einem der vorstehenden Ansprüche für Gleitelemente.

7. Verwendung einer Kupferlegierung gemäß einem der Ansprüche 1 bis 5 für Steckverbinder.

8. Verwendung einer Kupferlegierung gemäß einem der Ansprüche 1 bis 5 für Dichtelemente.

9. Verwendung einer Kupferlegierung gemäß einem der Ansprüche 1 bis 5 für Werkzeuge.

10. Verwendung aus einer Kupferlegierung gemäß einem der Ansprüche 1 bis 5 für Federelemente.

11. Verwendung einer Kupferlegierung gemäß einem der Ansprüche 1 bis 5 für Filterelemente.

12. Verfahren zur Herstellung eines Werkstoffs aus einer Kupferlegierung gemäß einem der vorstehenden Ansprüche 1 bis 5, wobei das Verfahren ein Warmumformen der Legierung im Temperaturbereich zwischen 610 und 690 °C mit einem Umformgrad von mindestens 20 % umfasst.

13. Verfahren gemäß Anspruch 12, **dadurch gekennzeichnet, dass** nach dem Warmumformen die Legierung im Temperaturbereich zwischen 300 und 400 °C ausgelagert wird, wobei die Auslagerungsdauer mindestens 30 Minuten und höchstens 7 Stunden beträgt.

## Claims

1. Copper alloy having the following composition in % by weight:
from 10.6 to 18% Al,
from 10.5 to 14.5% Ni,
optionally also up to 2% Fe,
optionally also up to 1% Co,
optionally also up to 0.5% Ti,
optionally also up to 0.5% Mn,
optionally also up to 0.15% B,
optionally also up to 0.1% Ca,
optionally also up to 0.1% C,
balance copper and inevitable impurities,
**characterised in that**
the alloy after a hot-forming operation in the temperature range between 610 and 690°C with a deformation degree of at least 20% has a tensile strength of at least 800 MPa, and **in that** nickel aluminides of the type NiAl are embedded in the structure of the alloy as precipitations.

2. Copper alloy according to claim 1, **characterised in that** the proportion of aluminium is at least 12% by weight and a maximum of 16% by weight.

3. Copper alloy according to claim 1 or 2,
**characterised in that**
the proportion of nickel is at least 11% by weight and a maximum of 13% by weight.

4. Copper alloy according to any one of claims 1 to 3,
**characterised in that**
the proportion of aluminium is at least 13.5% by weight and the proportion of nickel is at least 11.5% by weight.

5. Copper alloy according to any one of claims 1 to 4,
**characterised in that**
the ratio of aluminium proportion in % by weight with respect to the nickel proportion in % by weight is at least 0.95% and a maximum of 1.28.

6. Use of a copper alloy according to any one of the preceding claims for sliding elements.

7. Use of a copper alloy according to any one of claims 1 to 5 for plug type connectors.

8. Use of a copper alloy according to any one of claims 1 to 5 for sealing elements.

9. Use of a copper alloy according to any one of claims 1 to 5 for tools.

10. Use of a copper alloy according to any one of claims 1 to 5 for resilient elements.

11. Use of a copper alloy according to any one of claims 1 to 5 for filter elements.

12. Method for producing a material from a copper alloy according to any one of the preceding claims 1 to 5, wherein the method comprises a hot-forming of the alloy in the temperature range between 610 and 690°C with a degree of deformation of at least 20%.

13. Method according to claim 12, **characterised in that** after the hot-forming the alloy is aged in the temperature range between 300 and 400°C, wherein the duration of the ageing is at least 30 minutes and a maximum of 7 hours.

## Revendications

1. Alliage de cuivre avec la composition suivante en % en poids:
10,6 à 18 % de Al,
10,5 à 14,5 % de Ni,
éventuellement encore jusqu'à 2 % de Fe,
éventuellement encore jusqu'à 1 % de Co,
éventuellement encore jusqu'à 0,5 % de Ti,
éventuellement encore jusqu'à 0,5 % de Mn,
éventuellement encore jusqu'à 0,15 % de B,
éventuellement encore jusqu'à 0,1 % de Ca,
éventuellement encore jusqu'à 0,1 % de C,
le reste de cuivre et d'impuretés inévitables,
**caractérisé en ce que** l'alliage présente une résistance à la traction d'au moins 800 MPa après une déformation à chaud dans la plage de température entre 610 et 690°C avec un taux de déformation d'au moins 20 % et **en ce que** des aluminiures de nickel de type NiAI sont inclus sous forme de précipités dans la structure de l'alliage.

2. Alliage de cuivre selon la revendication 1, **caractérisé en ce que** la proportion d'aluminium est d'au moins 12 % en poids et d'au plus 16 % en poids.

3. Alliage de cuivre selon la revendication 1 ou 2, **caractérisé en ce que** la proportion de nickel est d'au moins 11 % en poids et d'au plus 13 % en poids.

4. Alliage de cuivre selon l'une des revendications 1 à 3, **caractérisé en ce que** la proportion d'aluminium est d'au moins 13,5 % en poids et la proportion de nickel est d'au moins 11,5 % en poids.

5. Alliage de cuivre selon l'une des revendications 1 à 4, **caractérisé en ce que** le rapport de la proportion d'aluminium en % en poids à la proportion de nickel en % en poids est d'au moins 0,95 et d'au plus 1,28.

6. Utilisation d'un alliage de cuivre selon l'une des revendications précédentes pour des éléments de glissement

7. Utilisation d'un alliage de cuivre selon l'une des revendications 1 à 5 pour des connecteurs.

8. Utilisation d'un alliage de cuivre selon l'une des revendications 1 à 5 pour des éléments d'étanchéité.

9. Utilisation d'un alliage de cuivre selon l'une des revendications 1 à 5 pour des outils.

10. Utilisation à partir d'un alliage de cuivre selon l'une des revendications 1 à 5 pour des éléments élastiques.

11. Utilisation d'un alliage de cuivre selon l'une des revendications 1 à 5 pour des éléments filtrants.

12. Procédé de fabrication d'un matériau à partir d'un alliage de cuivre selon l'une des revendications 1 à 5 précédentes, où le procédé comprend un formage à chaud de l'alliage dans la plage de température entre 610 et 690°C avec un degré de déformation d'au moins 20 %.

13. Procédé selon la revendication 12, **caractérisé en ce qu'**après le formage à chaud l'alliage est extrait dans la plage de température entre 300 et 400°C, où la durée d'extraction est d'au moins 30 minutes et d'au plus 7 heures.
